# EUROPEAN PATENT SPECIFICATION

(11) **EP 3 554 261 B1**
(45) Date of publication and mention of the grant of the patent: **15.09.2021**
(21) Application number: 17880515.6
(22) Date of filing: 15.12.2017
(51) Int. Cl.: A23K 10/26, A23K 40/00, A23K 50/42, A01K 15/02

(54) **RAWHIDE ANIMAL CHEW INCLUDING MICROPORES AND METHOD OF FORMING**
ROHHAUT-KAUARTIKEL MIT MIKROPOREN UND VERFAHREN ZUR FORMGEBUNG
PRODUIT À MÂCHER EN PEAU BRUTE POUR ANIMAUX COMPRENANT DES MICROPORES ET PROCÉDÉ DE FORMATION

(30) Priority: 16.12.2016 US 201662435374 P
(43) Date of publication of application: 23.10.2019
(73) Proprietor: IMS Trading, LLC, Wood Ridge, New Jersey 07075 (US)
(72) Inventor: AXELROD, Glen S., Colts Neck, New Jersey 07722 (US); GAJRIA, Ajay, Pune 411 060 Maharashtra (IN)
(74) Representative: Lippert Stachow Patentanwälte Rechtsanwälte
(86) International application number: PCT/US2017/066721
(87) International publication number: WO 2018/112369

(56) References cited:
- US-A- 3 837 054
- US-A1- 2004 156 883
- US-A1- 2004 156 883
- US-A1- 2005 145 193
- US-A1- 2007 289 552
- US-A1- 2016 198 740
- US-B1- 7 921 814
- US-B1- 7 921 814
- Unknown: "Tejas industries Rawhide", , 4 January 2011 (2011-01-04), XP055699117, Retrieved from the Internet: URL:http://www.hought.com/Rawhide%20brochu re%201-2011.pdf [retrieved on 2020-05-28]

## Description

### FIELD

The present disclosure is directed to a rawhide animal chew including micropores and methods of forming such chews.

### BACKGROUND

Animal chews are commonly provided to domesticated pets, and particularly dogs, to satisfy an innate need to chew. Animal chews also provide a source of entertainment and, depending on the material which the animal chew is formed from, can provide a source of nutrients. Further, it is believed that chewing on objects, such as animal chews, provides sufficient abrasion to improve the dental health and hygiene of an animal. Rawhide pet chews are sometimes perceived as a more natural product compared to pet chews formed from thermoplastic materials. Depending on preparation, rawhide also tends to be rather durable. Due to its durability, dogs may chew on rawhide for extended time periods slowly wearing away the rawhide. However, while dogs may gnaw on rawhide for extended periods of time, there are times relatively large pieces are pull off by the dog and ingested. It is, therefore, also beneficial to provide readily digestible rawhide chews without sacrificing durability.

Various means to solve the problem of improving digestibility, while maintaining chewability and durability, has been considered in the art. For example, U.S. 8,613,261 to Mendal, et al., described treating rawhide with various enzymes to break the rawhide down to increase its digestibility. U.S. 7,691,426 to Axelrod, et al., described comminuting rawhide into small particles or powder and incorporating it into edible resin. U.S. 7,678,402 to Marino describes forming large perforations in the chew to provide small sections that break off when chewed. Further, U.S. 7,147,888 to Brown, et al., describes impregnating rawhide pet chews with biofilm disrupting emulsions. To assist in impregnation of the rawhide, the rawhide is perforated with slits and holes introduced e.g. using punch needles of about 1/8 inch (3,175 mm) in diameter and spaced every ¼ inch (6,35 mm). Nevertheless, the problem of providing a digestible yet chewable and durable animal chew remains.

### SUMMARY

An aspect of the present disclosure relates to a microporous animal chew according to claim 1. The chew includes a rawhide sheet having a thickness in the range of 0.1 millimeters to 3.0 millimeters and a plurality of micropores extending through the rawhide sheet. The micropores exhibit a longest linear dimension across a cross-section of the micropores in the range of 1 micrometer to 2,000 micrometers and are present at a density of 1 to 100 pores per square centimeter.

Another aspect of the present disclosure relates to a method of forming a microporous animal chew according to claim 8. The method includes providing a wet rawhide sheet having a thickness in the range of 0.1 millimeters to 4.0 millimeters including water present 60 % to 80 % by weight of the total weight of the rawhide sheet or greater. The rawhide sheet is then pierced with pins and micropores are formed in the rawhide sheet. The micropores have a largest linear cross-sectional length in the range of 1 micrometer to 2,000 micrometers and are arranged to provide a pore density in the range of 1 to 100 pores per square centimeter. The rawhide sheet is dried to include 1 to 20 % by weight water of the total weight of the rawhide sheet.

### BRIEF DESCRIPTION OF THE DRAWINGS

The above-mentioned and other features of this disclosure, and the manner of attaining them, will become more apparent and better understood by reference to the following description of embodiments described herein taken in conjunction with the accompanying drawings, wherein:
FIG. 1 illustrates a method of forming an animal chew including a plurality of micropores;
FIG. 2A illustrates an embodiment of a cross-section of a micropore forming pin;
FIG. 2B illustrates an embodiment of a pore formed by the micropore forming pin exhibiting a longest linear cross-sectional length, CL;
FIG. 3A illustrates an embodiment of a press plate arrangement for forming micropores in a rawhide sheet;
FIG. 3B illustrates an embodiment of a press plate arrangement for forming micropores in a rawhide sheet;
FIG. 4 illustrates an embodiment of a calender roll system for forming micropores in a rawhide sheet; and
FIG. 5 illustrates pores formed in a rawhide sheet at an angle to the sheet surface.

### DETAILED DESCRIPTION

The present disclosure is directed to the provision of a rawhide animal chew including micropores and a method of forming such an animal chew. The micropores increase the surface area to volume ratio of the rawhide, allowing for a larger surface area to be contacted with digestive juices of the animal, increasing enzymatic digestion of the animal chew. The micropores may be formed by a number of methods, including piercing rawhide sheets with pins while the rawhide is wet.

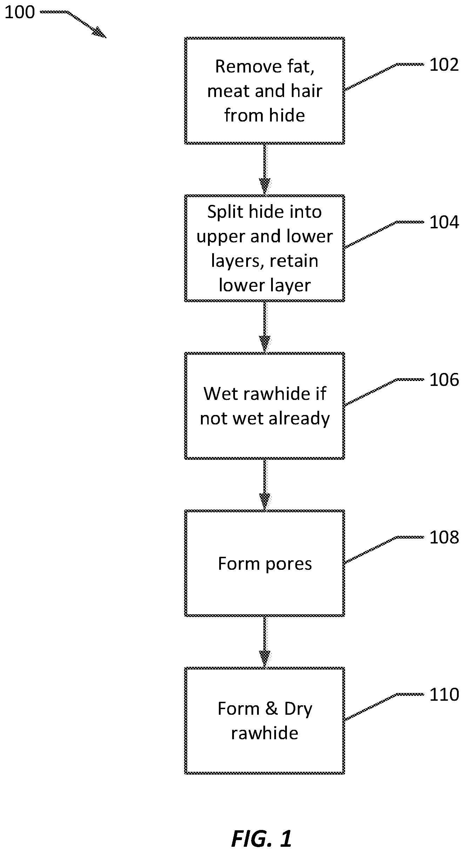

Rawhide, as referred to herein, is the untanned skin of buffalo, deer, elk, moose, cattle, pig, sheep, goats, or other hoofed animals. Generally, hides initially contain between 60 % to 80 % by weight water, such as between 60 to 70 % by weight water, and 20 % to 40 % by weight other substances such as fibrous proteins, collagen, keratin, elastin and reticulin as well as 0.01 to 2 % by weight ash including phosphorous, potassium, sodium arsenic, magnesium and calcium. The sheet containing such water has a thickness in the range of 0.1 mm to 4.0 mm. A hide may be prepared by any method known to those of ordinary skill in the art. One such method 100 is illustrated in FIG. 1 and includes removing most of the visible fat, meat and hair from the hide 102. The fat and meat may be removed by scraping and, once the fat and meat are removed, the hide may be treated in a solution of calcium carbonate, calcium hydroxide, slaked lime and wood ash, which may loosen and aid in the removal of hair. In addition, sodium sulphide, ammonium salts or enzymes may be added to the solution. However, in some preferred embodiments, enzymes and enzymatic treatments may be excluded. The hair is removed from the hide and the hide is rinsed. The hide may then be soaked in an aqueous solution including organic acids, inorganic acids and/or acid salts, such as potassium hydrogen tartrate and sodium bicarbonate. In embodiments, the hide is split 104 where the upper layer is separated from the under layer and the underlayer is used to make chews. In addition, the pieces may be soaked in a solution including hydrogen peroxide and chlorine. The hide may be rinsed again. The pieces of rawhide may be dried or further processed before drying. After drying, the hide preferably exhibits a moisture content in the range of 1 % to 20 % by weight water, including all values and ranges therein and preferably in the range of 5 % to 18 % by weight water. At such lower water levels the sheet has a preferred thickness of 0.1 mm to 3.0 mm.

Alternatively, the rawhide is provided in a rawhide resin composition, wherein the rawhide may be chopped or ground into small particles or powder. The particle size may be less than about 10 mm, such as in the range of 0.001 to 10 mm, including all values and increments therein. The moisture content of the rawhide may be adjusted to approximately 1 % to 20% by weight of the rawhide, including all increments and values therein, such at 8%, 10%, etc. The rawhide may then be combined with up to 20% by weight of casein, such as in the range of about 0.1 to 20% by weight, including all values and increments therein. Casein may be understood as a phosphoprotein of milk, wherein a phosphoprotein may be described as a group of substances that are chemically bonded to a substance containing phosphoric acid. The rawhide may also be combined with gelatin up to 10% by weight, such as in the range of 0.1 to 10% by weight, including all values and increments therein. Gelatin may be understood as a protein product produced by partial hydrolysis of collagen. In addition, attractants, such as flavorants, or nutrients may be compounded with the rawhide.

The rawhide particles, casein, gelatin and any additional attractants or nutrients may be melt processed, wherein the particles are plasticated in a plasticating device. Suitable plasticating devices may include injection molding machines, extruders (twin-screw, single screw, etc.) or any other device which may provide sufficient thermal-mechanical interaction to cause plastication, such as blenders. The temperature of the plasticating device may be sufficient to melt at least 10% to 100% of the particles, including all values and increments therein and may be in the range of about 120 to 150° C., including all values and increments therein. In addition, the particles may be pressurized during plastication wherein the applied pressure may be in the range of about 1 to 20 MPa, including all values and increments therein.

The rawhide (the rawhide pieces or rawhide resin composition) is preferably provided in the form of sheets. Prior to drying, and while wet (e.g. at a water level of greater than or equal to 60%), the rawhide sheets preferably exhibit a thickness in the range of 0.5 mm to 4 mm, including all values and ranges therein. The dried sheets (e.g. at a water content of 1% to 20% by weight) therefore have a relatively lower thickness, in the range of 0.1 millimeters to 3.0 millimeters, including all values and ranges therein, and preferably in the range of 1.0 mm to 2.0 mm or even more preferably 0.1 to 0.5 mm. Referring back to FIG. 1, the pores are preferably formed in the rawhide while it is wet.

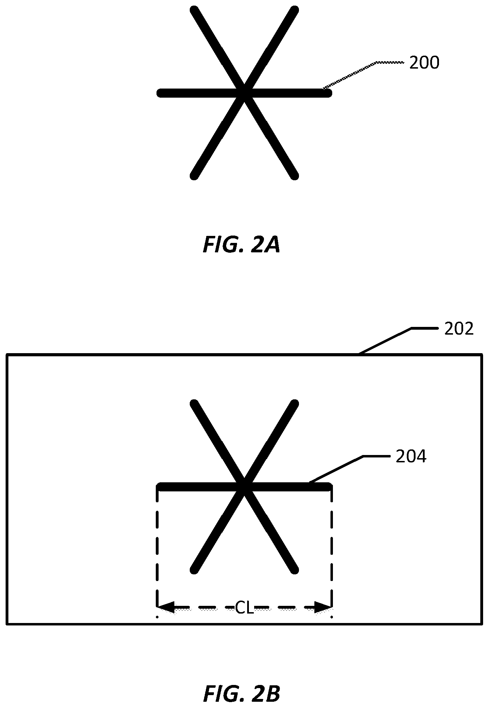

The rawhide is then pierced to form the micropores 108. Piercing may be facilitated by forcing a plurality of pins through the rawhide using, for example, a press or calendaring rolls. The micro-sized pins provide micropores having a largest linear cross-sectional length, CL, (see FIG. 2b) in the range of 1 micrometer to 2000 micrometers, including all values and ranges therein, such as from 1 micrometer to 300 micrometers, 100 micrometers to 300 micrometers, 300 micrometers to 1000 micrometers, and preferably in the range of 1000 micrometers to 2000 micrometers, once the rawhide shrinks upon drying. The pins may, therefore, be in the range of 0.1 % to 50 % larger in dimension that the desired pore size, including all values and ranges therein. The pins may exhibit a number of cross-sectional geometries. Preferably, in embodiments, the pins and pores produced by them exhibit multiple arms to form an asterisk- or star- like geometry, including three or more arms and preferably from four to six arms. In other embodiments, the pins are preferably circular in cross-section but may alternatively be rectangular, triangular, ellipsoid quatrefoil or square in cross-section, or may be a combination of one or more of any of the shapes noted above. In any of the above embodiments, the pins may be hollow. A cross-section of an example of a pin 200 exhibiting six arms and the pore 202 produced by such a pin are illustrated in FIGS. 2a and 2b. The micropore is illustrated in FIG. 2b as exhibiting a longest linear cross-sectional length, CL, which in the case of a circular pore is the pore diameter.

The micropores may be spaced uniformly, or randomly, over the surface of the rawhide at a density in the range of 1 to 100 pores per square centimeter (cm²), including all values in the range of 20 to 50 pores per square centimeter and more preferably in the range of 2 to 20 pores per square centimeter. In embodiments, pore density remains constant over the entire sheet. Alternatively, pore density is varied across the surface of a sheet such that the density increases or decreases across the sheet surface.

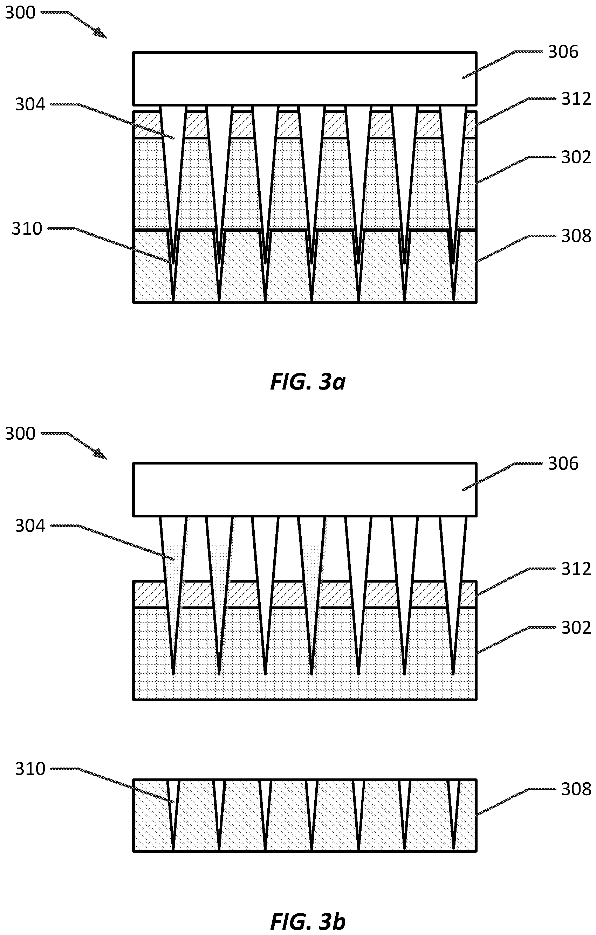

Generally, the pins are forced through the rawhide by utilizing equipment that may provide sufficient pressure to pierce the rawhide with the pins. As noted above, examples of such equipment include presses or calendaring rolls that may be operated using hydraulics, mechanical linkages or pneumatics. FIG. 3 illustrates an embodiment that utilizes a press 300. The press includes two plates 306 and 308 between which the rawhide 302 is placed. The plates are forced together to provide an elevated pressure of greater than 2 kPa, such as in the range of 2 kPa to 100 kPa, including all values and ranges therein, on the rawhide and pins. One plate, the carrier plate 306, carries the pins 304, and the other plate, the receiving plate 308, is the plate upon which the pins bear or are received. As illustrated in FIG. 3, the receiving plate may include a plurality of holes 310 for receiving the pins therein. In addition to apply force to pierce the rawhide, when the pins are received in the receiving plate 308, the plates may close together and squeeze excess water from the hide reducing the amount of water in the hide. The holes 310 may provide drain passages to facilitate water drainage out of the press. In alternative embodiments, both plates include both pins and holes. Further, in any of the above embodiments, the pins may retract into the carrier plate to facilitate stripping of the hide from the pins and the plate, or a stripper plate 312, as illustrated in FIG. 3, may be provided to help remove the rawhide from the pins once the press opens.

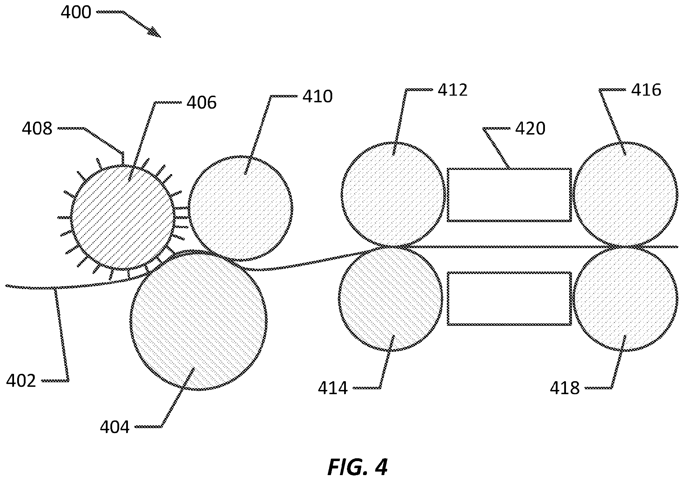

FIG. 4 illustrates an embodiment of calendaring equipment 400, wherein the rawhide 402 passes through a series of rolls. The rolls include at least one bearing roll 404 and at least one pin roll 406 on which a plurality of pins 408 are mounted. In addition, a squeeze roll 410 may optionally be provided. The pins 408, being carried by the pin roll 406, bear against the bearing roll 404 and pierce the rawhide 402 as the rawhide passes between the rolls. Then the squeeze roll 410, which is preloaded against the bearing roll 404 or an additional bearing roll (not illustrated), may be used to remove excess water from the rawhide. In embodiments, the pins may be retracted to facilitate release from the pin roll 406.

In embodiments, upon or after forming the micropores in the rawhide, the pores are filled with a support additive, such as a starch, calcium carbonate, vitamins, minerals or mixtures thereof. As the rawhide dries and shrinks, the support additive prevents the pores from closing and helps maintain their shape. As the pet chews upon the rawhide, the support additive is loosened from the animal chew and is readily ingested by the animal. The support additive may be loaded into the micropores through pins that are hollow and injected upon pore formation or pressed into the pores through further calendering of the rawhide sheets. In embodiments, the support additive is provided as a dry powder and pressed through the hollow pins.

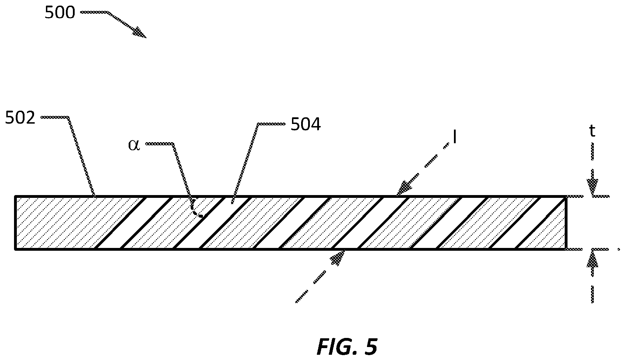

In addition, in any of the embodiments described above, the pins are inserted into the rawhide at angle **α** relative to the surface 502 of the rawhide 500, thereby creating micropores having a length, **l,** greater than the average thickness, **t,** of the rawhide as illustrated in FIG. 5. The angle **α,** relative to the surface of the rawhide, is in the range of 10 to 80 degrees, including in particular all values and ranges therein such as 30 to 60 degrees. Providing the pores at an angle may assist in increasing the surface area to volume ratio as well as the surface area available for contact with digestive juices. The angle **α** is constant or, alternatively, varied over the surface of the sheet. As illustrated, the surfaces of the rawhide may generally be parallel. However, it should be appreciated that the thickness of the rawhide sheets may vary.

Again referring to FIG. 1, the rawhide sheets may be formed into a desired final shape and dried 110 after the pores are formed. The sheets may be dried from 3 to 6 days at temperatures in the range of 35 °C to 80 °C, including all values and ranges therein. In embodiments, drying may occur under tension using a tension frame after removing the rawhide from a press or calendaring line. In other embodiments, as illustrated in FIG. 4, tenter rollers 412, 414, 416, 418 are placed in the process line after calendaring as illustrated in FIG. 4. To maintain a desired tension, the tentering rolls may rotate at faster speeds than the rolls which precede them. If other geometries are desired, the sheets may be cut, rolled and formed into rolls, rings, pretzels, sticks, braids, or chips. The rawhide may also be knotted to assume the general geometry of a bone or knotted bone. In alternative embodiments, the rawhide sheet may be die cut into desired shapes.

Once formed, the rawhide may then be dried with or without the assistance of a heat source such as an oven within the drying temperatures and times noted above. FIG. 4 illustrates the incorporation of an oven 420 in the process line, to facilitate drying of a sheet. The amount of water may be reduced to 1 to 20 % by weight of the final product, including all values and ranges therein.

The above, therefore, provides a rawhide animal chew formed from a rawhide sheet having a thickness in the range of 0.1 millimeters to 3.0 millimeters. The rawhide sheet includes a plurality of micropores having a longest linear dimension across the cross-section length, CL, in the range of 1 micrometer to 2000 micrometers and present at a density in the range of 1 pore to 100 pores per square centimeter. The pores assume one or more geometries, depending on the pin utilized to form the pores. In embodiments, the rawhide is a rawhide resin composition. The micropores, in embodiments, are filled with a support additive mechanically retained in the pores due to the shrinking of the rawhide as it dries. The rawhide sheet may be manipulated to assume the geometry of a roll, ring, pretzel, or knotted bone or die cut to provide a desired geometry.

An evaluation has been made using an in vitro procedure with simulated gastric and small intestine digestive fluids. Reference is made to the in vitro testing procedures reported by Boisen and Eggum, 1991, Nutr. Res. Rev. 4 141-162. Samples were incubated for 6 hours in simulated gastric fluid containing hydrochloric acid and pepsin, then for 18 hours in simulated small intestinal fluid containing pancreatin. Following incubation, percentage in vitro dry matter disappearance was calculated. Dimensions and weights of each treat were measured before and after incubation. Table 1 provides the results for samples of rawhide having different pore sizes and different spacing between the pores in the identified samples:

**Table I.**

| **Small Intestine Dry Matter Disappearance** | |
|---|---|
| **Sample** | **Intestinal Phase (18 Hours) % Dry Matter Disappearance** |
| **I (Control-No Pores)** | **70.2** |
| **II (2.0 mm pores/6.0 mm apart)** | **84.3** |
| **III (1.0 mm pores/3.0 mm apart)** | **92.1** |

The microporous animal chews herein is one that is capable of indicating an intestinal phase dry matter disappearance in small intestinal fluid containing pancreatin, of 84.3 % and as high as 92.1 %, as compared to a control value of 70.2%. The average thickness of these tested samples was 1.7 mm. Accordingly, in preferred embodiment, it is contemplated that the microporous animal chews herein indicate a dry matter disappearance in simulated small intestinal fluid containing pancreatin in the range of greater than 70.2 % to 95.0%, more preferably in the range of 75.0% to 95.0%, even more preferably 80.0% to 95.0%, and in a most preferred embodiment, in the range of 85.0% to 95.0 % or 90.0% to 95.0 %.

In particular, for 1.0 mm pores, where the pore size may range from 0.90 mm to 1.1 mm, that are spaced 3.0 mm apart (+/- 0.5 mm) it was considered remarkable that one could achieve for such pore size, after 18 hours in the identified testing environment, a % dry matter disappearance of greater than 90% in small intestinal fluid containing pancreatin, and as noted, in the range of 90.0 % to 95.0 %. Moreover, it is contemplated here that when the pore size is reduced below 1.0 mm, and falls in the range of 0.001 mm to 0.99 mm, after 18 hours in the identified testing environment, the % dry matter disappearance will fall in the range of greater than 70.2% up to 100%. In addition, it is similarly contemplated that when one reduces the thickness below the average thickness of the samples tested (1.7 mm), to a thickness of 0.1 mm to less than 1.7 mm, the % dry matter disappearance will similarly fall in the range of greater than 70.2% up to 100%.

The foregoing description of several methods and embodiments has been presented for purposes of illustration. It is not intended to be exhaustive or to limit the claims to the precise steps and/or forms disclosed, and obviously many modifications and variations are possible in light of the above teaching. It is intended that the scope of the invention be defined by the claims appended hereto.

## Claims

1. A microporous animal chew comprising:
a rawhide sheet (500) having a thickness (t) in the range of 0.1 millimeters to 3.0 millimeters; and
a plurality of micropores (504) extending through said rawhide sheet (500), wherein said micropores (504):
extend at an angle α relative to a surface (502) of said rawhide sheet (500), wherein α is in the range of 10 to 80 degrees, preferably in the range of 30 to 60 degrees;
are present at a density of 1 to 100 pores per square centimeter of said rawhide sheet (500); and
a longest linear dimension across a cross-section (CL) of said micropores (504) is in the range of 1 micrometer to 2,000 micrometers.

2. The microporous animal chew of claim 1, wherein said micropores (204) exhibit 3 or more arms.

3. The microporous animal chew of claim 1, further comprising a support additive that is retained in said micropores (504).

4. The microporous animal chew of claim 1, wherein said rawhide sheet (500) includes a rawhide resin composition and/or said rawhide sheet (500) is in the form of a roll, ring, pretzel, stick, braid, chip or knotted to assume the general geometry of a bone or a knotted bone.

5. The microporous animal chew of claim 1, wherein length (I) of said micropores (504) is greater than said thickness (t) of said rawhide sheet (500).

6. The microporous animal chew of claim 1 wherein said chew indicates a dry matter disappearance in small intestinal fluid containing pancreatin in the range of greater than 70.2% to 100%.

7. The microporous chew of claim 3 wherein said support additive comprises starch, calcium carbonate, vitamins, minerals, or a mixture thereof.

8. A method of forming a microporous animal chew, comprising:
providing a wet rawhide sheet (302; 402) having a thickness in the range of 0.5 millimeters to 4.0 millimeters including water present at 60 % to 80 % by weight of a total weight of the wet rawhide sheet or greater;
piercing said wet rawhide sheet (302; 402) with pins (200; 304; 408) at an angle α relative to a surface of the rawhide sheet (302; 402) and forming micropores in said wet rawhide sheet, wherein α is in a range of 10 to 80 degrees, preferably in the range of 30 to 60 degrees, and said micropores have a largest linear cross-sectional length (CL) in the range of 1 micrometer to 2,000 micrometers and are arranged to provide a pore density in the range of 1 to 100 pores per square centimeter; and
drying said wet rawhide sheet (302; 402), wherein said dried rawhide sheet includes 1 to 20 % by weight water of a total weight of the dried rawhide sheet, and preferably has a thickness of 0.1 millimeters to 3.0 millimeters.

9. The method of claim 8, wherein said pins (304; 408) are hollow pins and the method further comprises filling the micropores with a support additive prior to drying, wherein said filling comprises loading said support additive through the hollow pins (304; 408) and into the micropores.

10. The method of claim 8,wherein said pins (200) have three or more arms.

11. The method of claim 8, wherein said wet rawhide sheet (302) is provided between a carrier plate (306) and a receiving plate (308), wherein said carrier plate (306) carries said pins (304), and piercing said wet rawhide sheet (302) includes forcing said plates (306, 308) together, preferably wherein said receiving plate (308) includes holes (310) to receive said pins (304) therein, most preferably wherein the method further comprises compressing said wet rawhide sheet (302) between said plates (306, 308) to remove at least a portion of water present in said wet rawhide sheet (302).

12. The method of claim 8, wherein said wet rawhide sheet (402) is fed into calender rollers, wherein one of said rollers (406) includes said pins (408) and said pins (408) pierce said wet rawhide sheet (402) as said pins (408) bear against a bearing roll (404), the method preferably further comprising compressing said wet rawhide sheet (402) between a squeeze roll (410) and said bearing roll (404) and removing a portion of said water present in said rawhide sheet (402), most preferably further comprising stretching said rawhide sheet (402) prior to drying by passing said rawhide sheet (402) between tenter rolls (412, 414, 416, 418).

13. The method of claim 9, wherein said support additive comprises starch, calcium carbonate, vitamins, minerals, or a mixture thereof.

14. The method of claim 8, wherein said micropores (504) have a length (I) that is greater than the thickness (t) of said rawhide sheet (500).

15. The method of claim 9, wherein loading said support additive comprises injecting said support additive through said hollow pins and into said micropores.

## Patentansprüche

1. Mikroporöser Kauartikel für Tiere, umfassend:
ein Rohhautblatt (500) mit einer Dicke (t) in dem Bereich von 0,1 Millimeter bis 3,0 Millimeter
und
eine Mehrzahl von Mikroporen (504), die sich durch das Rohhautblatt (500) erstrecken, wobei die Mikroporen (504):
sich in einem Winkel α relativ zu einer Oberfläche (502) des Rohhautblatts (500) erstrecken, wobei α in dem Bereich von 10 bis 80 Grad, vorzugsweise in dem Bereich von 30 bis 60 Grad liegt;
in einer Dichte von 1 bis 100 Poren pro Quadratzentimeter des Rohhautblatts (500) vorliegen; und
eine längste lineare Abmessung über einen Querschnitt (CL) der Mikroporen (504) in dem Bereich von 1 Mikrometer bis 2.000 Mikrometer liegt.

2. Mikroporöser Kauartikel für Tiere nach Anspruch 1, wobei die Mikroporen (204) 3 oder mehr Arme aufweisen.

3. Mikroporöser Kauartikel für Tiere nach Anspruch 1, ferner enthaltend ein Stützadditiv umfasst, das in den Mikroporen (504) zurückgehalten wird.

4. Mikroporöser Kauartikel für Tiere nach Anspruch 1, wobei das Rohhautblatt (500) eine Rohhaut-Harzzusammensetzung enthält und/oder das Rohhautblatt (500) in Form einer Rolle, eines Rings, einer Brezel, eines Sticks, eines Zopfes, eines Chips oder eines Knotens vorliegt, um die allgemeine Geometrie eines Knochens oder eines geknoteten Knochens anzunehmen.

5. Mikroporöser Kauartikel für Tiere nach Anspruch 1, wobei die Länge (I) der Mikroporen (504) größer ist als die Dicke (t) des Rohhautblatts (500).

6. Mikroporöser Kauartikel für Tiere nach Anspruch 1, wobei der Kauartikel ein Schwinden der Trockensubstanz in Dünndarmflüssigkeit, die Pankreatin enthält, im Bereich von mehr als 70,2 % bis 100 % anzeigt.

7. Mikroporöser Kauartikel für Tiere nach Anspruch 3, wobei das Stützadditiv Stärke, Kalziumkarbonat, Vitamine, Mineralien oder eine Mischung davon umfasst.

8. Verfahren zur Herstellung eines mikroporösen Kauartikels für Tiere, umfassend:
Bereitstellen eines nassen Rohhautblatts (302; 402) mit einer Dicke im Bereich von 0,5 Millimeter bis 4,0 Millimeter, enthaltend Wasser, das mit 60 bis 80 Gew.-% oder mehr des Gesamtgewichts des nassen Rohhautblattes vorhanden ist;
Durchstechen des nassen Rohhautblatts (302; 402) mit Stiften (200; 304; 408) in einem Winkel **α** relativ zu einer Oberfläche des Rohhautblatts (302; 402) und Bilden von Mikroporen in dem nassen Rohhautblatt, wobei **α** in einem Bereich von 10 bis 80 Grad, vorzugsweise im Bereich von 30 bis 60 Grad liegt und die Mikroporen eine größte lineare Querschnittslänge (CL) im Bereich von 1 Mikrometer bis 2.000 Mikrometer aufweisen und so angeordnet sind, dass sie eine Porendichte im Bereich von 1 bis 100 Poren pro Quadratzentimeter bereitstellen; und
Trocknen des nassen Rohhautblatts (302; 402), wobei das getrocknete Rohhautblatt 1 bis 20 Gew.-% Wasser, bezogen auf das Gesamtgewicht des getrockneten Rohhautblatts, enthält und vorzugsweise eine Dicke von 0,1 Millimeter bis 3,0 Millimeter aufweist.

9. Verfahren nach Anspruch 8, wobei die Stifte (304; 408) Hohlstifte sind und das Verfahren ferner das Füllen der Mikroporen mit einem Stützadditiv vor dem Trocknen umfasst, wobei das Füllen das Einbringen des Stützadditivs durch die hohlen Stifte (304; 408) und in die Mikroporen umfasst.

10. Verfahren nach Anspruch 8, wobei die Stifte (200) drei oder mehr Arme haben.

11. Verfahren nach Anspruch 8, wobei das nasse Rohhautblatt (302) zwischen einer Trägerplatte (306) und einer Aufnahmeplatte (308) vorgesehen ist, wobei die Trägerplatte (306) die Stifte (304) trägt und das Durchstechen des nassen Rohhautblatts (302) das Zusammenpressen der Platten (306, 308) umfasst, wobei die Aufnahmeplatte (308) vorzugsweise Löcher (310) zum Aufnehmen der Stifte (304) aufweist, wobei das Verfahren weiter vorzugsweise ferner das Komprimieren des nassen Rohhautblatts (302) zwischen den Platten (306, 308) umfasst, um mindestens einen Teil des in dem nassen Rohhautblatt (302) vorhandenen Wassers zu entfernen.

12. Verfahren nach Anspruch 8, wobei das nasse Rohhautblatt (402) Kalanderwalzen zugeführt wird, wobei eine der Walzen (406) die Stifte (408) aufweist und die Stifte (408) das nasse Rohhautblatt (402) durchstechen, wenn die Stifte (408) gegen eine Trägerwalze (404) drücken, wobei das Verfahren vorzugsweise ferner das Komprimieren des nassen Rohhautblatts (402) zwischen einer Quetschwalze (410) und der Trägerwalze (404) und das Entfernen eines Teils des in dem Rohhautblatt (402) vorhandenen Wassers umfasst, wobei das Verfahren höchst vorzugsweise ferner das Strecken des Rohhautblatts (402) vor dem Trocknen durch ein Hindurchführen des Rohhautblatts (402) zwischen Streckwalzen (412, 414, 416, 418) umfasst.

13. Verfahren nach Anspruch 9, wobei das Stützadditiv Stärke, Kalziumkarbonat, Vitamine, Mineralien oder eine Mischung davon umfasst.

14. Verfahren nach Anspruch 8, wobei die Mikroporen (504) eine Länge (I) aufweisen, die größer ist als die Dicke (t) des Rohhautblatts (500).

15. Verfahren nach Anspruch 9, wobei das Beschicken mit dem Stützadditiv das Einspritzen des Stützadditivs durch die Hohlstifte und in die Mikroporen umfasst.

## Revendications

1. Produit à mâcher microporeux pour animaux comprenant:
une feuille en peau brute (500) ayant une épaisseur (t) dans la gamme de 0,1 millimètre à 3,0 millimètres;
et
une pluralité de micropores (504) s'étendant à travers ladite feuille en peau brute (500), dans lequel lesdits micropores (504):
s'étendent selon un angle **α** par rapport à une surface (502) de ladite feuille e peau brute (500), où **α** est dans la gamme de 10 à 80 degrés, de préférence dans la gamme de 30 à 60 degrés;
sont présents à une densité de 1 à 100 pores par centimètre carré de ladite feuille en peau brute (500); et
une dimension linéaire la plus longue à travers une section transversale (CL) desdits micropores (504) est dans la gamme de 1 micromètre à 2000 micromètres.

2. Produit à mâcher microporeux pour animaux selon la revendication 1, dans lequel lesdits micropores (204) présentent 3 bras ou plus.

3. Produit à mâcher microporeux pour animaux selon la revendication 1, comprenant en outre un additif de support qui est retenu dans lesdits micropores (504).

4. Produit à mâcher microporeux pour animaux selon la revendication 1, dans lequel ladite feuille en peau brute (500) comprend une composition de résine et de peau brute et/ou ladite feuille en peau brute (500) se présente sous la forme d'un rouleau, d'un anneau, d'un bretzel, d'un bâton, d'une tresse, d'une puce ou d'un nœud pour prendre la géométrie générale d'un os ou d'un os noué.

5. Produit à mâcher microporeux pour animaux selon la revendication 1, dans lequel la longueur (I) desdits micropores (504) est supérieure à ladite épaisseur (t) de ladite feuille en peau brute (500).

6. Produit à mâcher microporeux pour animaux selon la revendication 1, dans lequel ledit produit à mâcher indique une disparition de la matière sèche dans le fluide de l'intestin grêle contenant de la pancréatine dans la gamme de plus de 70,2% à 100%.

7. Produit à mâcher microporeux selon la revendication 3, dans lequel ledit additif de support comprend de l'amidon, du carbonate de calcium, des vitamines, des minéraux, ou un mélange de ceux-ci.

8. Procédé de formation d'un produit à mâcher microporeux pour animaux, comprenant:
la fourniture d'une feuille en peau brute humide (302; 402) ayant une épaisseur dans la gamme de 0,5 millimètres à 4,0 millimètres comprenant de l'eau présente à 60% à 80% en poids d'un poids total de la feuille en peau brute humide ou plus;
percer ladite feuille en peau brute humide (302; 402) avec des broches (200; 304; 408) à un angle **α** par rapport à une surface de la feuille en peau brute (302; 402) et former des micropores dans ladite feuille en peau brute humide, où **α** est dans une gamme de 10 à 80 degrés, de préférence dans la gamme de 30 à 60 degrés, et lesdits micropores ont une longueur de section transversale linéaire la plus grande (CL) dans la gamme de 1 micromètre à 2000 micromètres et sont disposés pour fournir une densité de pores dans la gamme de 1 à 100 pores par centimètre carré; et
sécher ladite feuille en peau brute humide (302; 402), ladite feuille en peau brute séchée comprenant 1 à 20 % en poids d'eau par rapport au poids total de la feuille en peau brute séchée, et ayant de préférence une épaisseur de 0,1 millimètre à 3,0 millimètres.

9. Procédé selon la revendication 8, dans lequel lesdites broches (304; 408) sont des broches creuses et le procédé comprend en outre le remplissage des micropores avec un additif de support avant le séchage, ledit remplissage comprenant le chargement dudit additif de support à travers les broches creuses (304; 408) et dans les micropores.

10. Procédé selon la revendication 8, dans lequel lesdites broches (200) ont trois bras ou plus.

11. Procédé selon la revendication 8, dans lequel ladite feuille en peau brute humide (302) est prévue entre une plaque de support (306) et une plaque de réception (308), dans lequel ladite plaque de support (306) porte lesdites broches (304), et le perçage de ladite feuille en peau brute humide (302) comprend forcer lesdites plaques (306, 308) ensemble, de préférence dans lequel ladite plaque de réception (308) comprend des trous (310) pour recevoir lesdites broches (304) à l'intérieur, de manière encore plus préférée dans lequel le procédé comprend en outre la compression de la feuille en peau brute humide (302) entre lesdites plaques (306, 308) pour éliminer au moins une partie de l'eau présente dans ladite feuille en peau brute humide (302).

12. Procédé de la revendication 8, dans lequel ladite feuille en peau brute humide (402) est alimentée dans des rouleaux de calendrier, dans lequel un desdits rouleaux (406) comprend lesdites broches (408) et lesdites broches (408) percent ladite feuille en peau brute humide (402) lorsque lesdites broches (408) portent contre un rouleau porteur (404), le procédé comprenant de préférence en outre la compression de ladite feuille en peau brute humide (402) entre un rouleau presseur (410) et ledit rouleau porteur (404) et l'élimination d'une partie de ladite eau présente dans ladite feuille en peau brute (402), comprenant de préférence en outre l'étirement de ladite feuille en peau brute (402) avant le séchage en faisant passer ladite feuille en peau brute (402) entre des rouleaux de tension (412, 414, 416, 418).

13. Procédé selon la revendication 9, dans lequel ledit additif de support comprend de l'amidon, du carbonate de calcium, des vitamines, des minéraux ou un mélange de ceux-ci.

14. Procédé selon la revendication 8, dans lequel lesdits micropores (504) ont une longueur (I) qui est supérieure à l'épaisseur (t) de la feuille en peau brute (500).

15. Procédé selon la revendication 9, dans lequel le chargement dudit additif de support comprend l'injection dudit additif de support à travers lesdites broches creuses et dans lesdits micropores.
